# EUROPÄISCHE PATENTSCHRIFT

(11) **EP 1 498 033 B1**
(45) Veröffentlichungstag und Bekanntmachung des Hinweises auf die Patenterteilung: **28.03.2007**
(21) Anmeldenummer: 04016380.0
(22) Anmeldetag: 13.07.2004
(51) Int. Cl.: A21D 13/00, A23L 1/218, A23L 1/16, A23L 1/216

(54) **Sauerkraut und Schupfnudeln enthaltende Backwaren und Verfahren zu deren Herstellung**
Bakery product comprising sauerkraut and gnocci and process for its preparation
Produit de boulangerie comprenant de la choucroute et des gnocchis et son procédé de préparation

(30) Priorität: 18.07.2003 DE 10332690; 04.10.2003 DE 10346165
(43) Veröffentlichungstag der Anmeldung: 19.01.2005
(73) Patentinhaber: Nagel, Georg, 89555 Steinheim a.A. (DE)
(72) Erfinder: Nagel, Georg, 89555 Steinheim a.A. (DE)
(74) Vertreter: Kaufmann, Ursula Josefine

(56) Entgegenhaltungen:
- "Sauerkrautkuchen"[Online] 20. Juni 2000 (2000-06-20), XP002301217 Gefunden im Internet: URL:www.oetker.de> [gefunden am 2004-10-15]
- "Altdeutscher Sauerkraut-Kuchen"[Online] 9. März 2001 (2001-03-09), XP002301218 Gefunden im Internet: URL:www.rezeptezentrum.com> [gefunden am 2004-10-18]
- "Schupfnudel-Kraut-Auflauf"[Online] 27. November 2001 (2001-11-27), XP002301219 Gefunden im Internet: URL:www.rezepte.icook.de> [gefunden am 2004-10-15]
- "Nudeltorte mit Speck und Champignons"[Online] 27. April 2001 (2001-04-27), XP002301220 Gefunden im Internet: URL:www.chefkoch.de> [gefunden am 2004-10-18]
- "Mini-Quiches nit Sauerkraut und Schrimps"[Online] 9. März 2002 (2002-03-09), XP002301221 Gefunden im Internet: URL:www.chefkoch.de> [gefunden am 2004-10-18]
- "Quiche von Sauerkraut und Putenbrust"[Online] 9. März 2001 (2001-03-09), XP002301222 Gefunden im Internet: URL:www.rezeptezentrum.com> [gefunden am 2004-10-18]
- "Quark-Sauerkraut-Auflauf"[Online] 9. März 2001 (2001-03-09), XP002301223 Gefunden im Internet: URL:www.rezeptezentrum.com> [gefunden am 2004-10-18]
- "Schupfnudel mit Speck und Sauerkraut"[Online] 2002, XP002301224 Gefunden im Internet: URL:www.kochbares.de> [gefunden am 2004-10-15]
- BISSON: "Les desserts - Pâte levée" 2001, EDITIONS SOLAR , PARIS , XP002301225 * Seite 11 *

## Beschreibung

Die Erfindung betrifft ein Backgericht aus Hefeteig und ein Verfahren zu dessen Herstellung.

Hefeteiggebäcke sind in großer Zahl und in verschiedensten Ausführungsformen bekannt. Sie sind größtenteils an eine Pizza, also an ein flaches, neapolitanisches Gebäck angelehnt, welches regelmäßig mit Tomaten, Käse, Schinken, Sardellen, usw. belegt und anschließend gebacken wird.

Des weiteren sind Backgerichte wie Zwiebelkuchen, Rähmkuchen und Flammkuchen bekannt.

www.oetker.de (20.06.2000) offenbart einen Sauerkrautkuchen, wobei auf einen Hefeteig ein Belag aus Mandarinen, Kasselerbraten, Sauerkraut, Mandarinensaft, Curry, Salz und Pfeffer aufgebracht ist und wobei als Überzug ein Guß aus Eier, Creme fraiche, Milch, Mandarinensaft und Kümmel vorgesehen ist.

Der Erfindung liegt die Aufgabe zugrunde, ein Backgericht aus Hefeteig der eingangs erwähnten Art zu schaffen, das sich durch sein appetitliches Äußeres und seinen besonders guten Geschmack von herkömmlichen Hefeteiggebäcken abhebt und das sehr gut haltbar ist.

Diese Aufgabe wird erfindungsgemäß durch ein Backgericht aus Hefe- und Kartoffelteig gelöst, wobei auf den Hefeteig Schupfnudeln aus Kartoffelteig und eine Krautmischung aufgebracht sind und wobei als Überzug ein Guss aus Molkereierzeugnissen vorgesehen ist.

Die Aufgabe wird erfindungsgemäß ebenfalls durch ein Herstellungsverfahren für ein Backgericht aus Hefe- und Kartoffelteig gemäß Anspruch 11 gelöst.

Durch die erfindungsgemäßen Maßnahmen wird ein Backgericht mit einer wohlschmeckenden, einzigartigen Kombination aus einem Hefeteig, Schupfnudeln mit einer Krautmischung und einem Guss aus Molkereierzeugnissen, insbesondere Sauerrahmerzeugnissen, geschaffen. Das Backgericht überzeugt durch sein appetitliches Äußeres und durch seinen Wohlgeschmack. Darüber hinaus wurde festgestellt, dass das erfindungsgemäße Backgericht, insbesondere bei Aufbewahrung im gekühlten Zustand wie z.B. im Kühlschrank, sehr gut haltbar ist.

Die erfindungsgemäße Zusammensetzung ist auf vegetarischer Basis. Sie kann jedoch selbstverständlich auch durch Zugabe von Fleisch- und/oder Wurstprodukten entsprechend ergänzt und damit auch geschmacklich erweitert werden.

Hierzu kann die Krautmischung in einer vorteilhaften Zusammensetzung Sauerkraut, Röstzwiebeln, Speck, insbesondere gewürfelten Bauchspeck, oder Mischungen daraus aufweisen. Anstelle von Speck oder auch zusätzlich dazu können selbstverständlich auch noch andere Fleisch- oder Wurstprodukte in Streifen- oder Würfelform beigegeben werden. Bei einer vegetarischen Zusammensetzung des erfindungsgemäßen Backgerichtes können ebenfalls weitere vegetarische Produkte, vorzugsweise in Würfel- oder Streifenform, hinzugegeben werden. In diesem Falle kann es sich zur Geschmacksverstärkung auch vorteilhaft erweisen, weitere Gewürze und/oder Geschmacksverstärker hinzuzufügen.

Vorteilhafte Ausgestaltungen und Weiterbildungen der Erfindung ergeben sich aus den Unteransprüchen. Nachfolgend sind anhand der Zeichnung Ausführungsbeispiele beschrieben.

Es zeigen:
- Fig. 1a - 1d: einen Produktionsweg eines erfindungsgemäßen Backgerichtes in einem 28-cm-Backblech für ca. zwei Personen;
- Fig. 2a - 2d: einen Produktionsweg des erfindungsgemäßen Backgerichtes für ein Backblech der Gastronorm (GN) 1/1 mit 30 x 50 cm.

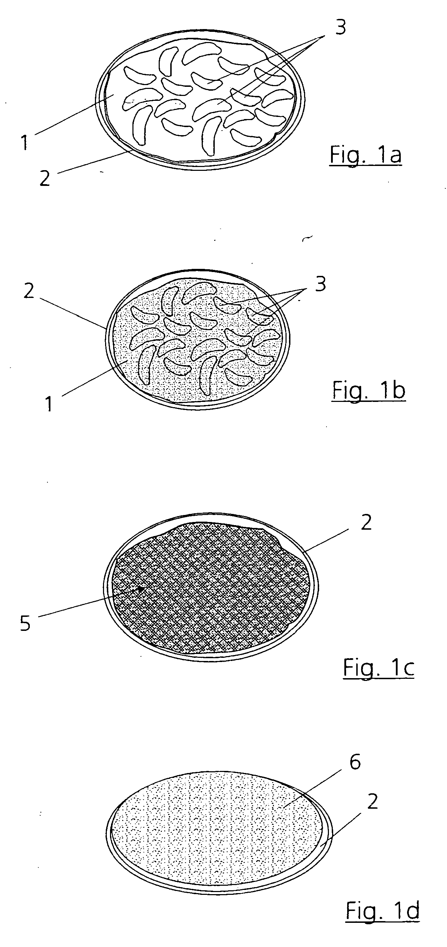

Wie aus Fig. 1a ersichtlich, ist ein Hefeteig 1 auf einem Backblech 2 ausgewellt und mit Schupfnudeln 3 belegt. Das Backblech 2 weist einen Durchmesser von 28 cm auf. Die Schupfnudeln 3 sind aus hinlänglich bekanntem Kartoffelteig gefertigt.

Wie aus Fig. 1b ersichtlich, wurde auf dem Hefeteig 1 mit den Schupfnudeln 2 eine Krautmischung 4 aus Sauerkraut, rohem gewürfeltem Bauchspeck und Röstzwiebeln aufgebracht.

In Fig. 1c wurde der Hefeteigboden 1 mit den Schupfnudeln 3 und der Krautmischung 4 mit einem Guss 5 aus Molkereierzeugnissen, Eiern, Kräutern und Gewürzen bedeckt.

Fig. 1d zeigt ein fertiges erfindungsgemäßes Backgericht nach einem Backen bei Heißluft in einem auf 170° C vorgeheizten Ofen für ca. 25 Minuten.

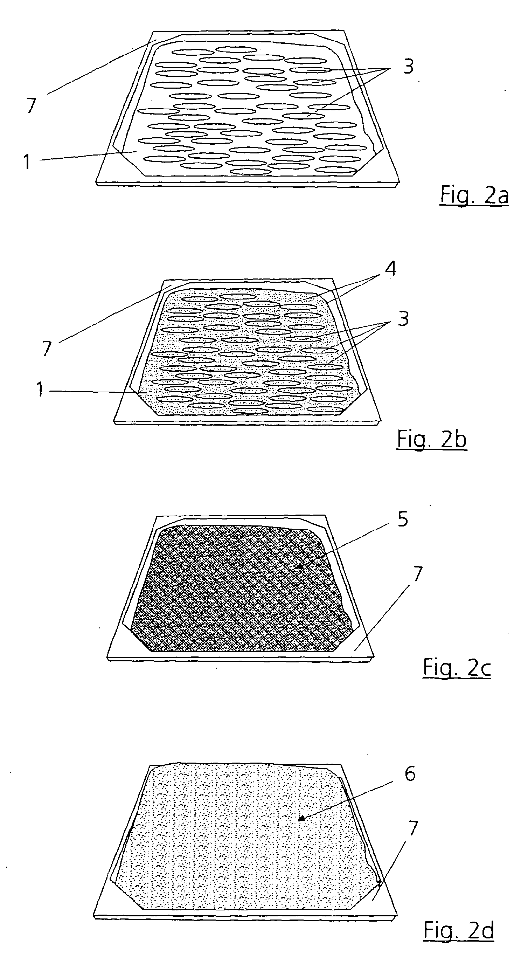

In den Figuren 2a bis 2d ist derselbe Produktionsweg für ein Gastronorm 1/1-Backblech 7 (30 cm x 50 cm) gezeigt. Die Backzeit beträgt hier ca. 40 Minuten.

Für das Verfahren zur Herstellung des erfindungsgemäßen Backgerichts 6 haben sich die folgenden Verfahrensschritte als sehr vorteilhaft erwiesen:
1. Zubereiten des Hefeteigs 1 und gehen lassen (vorzugsweise zwei Stunden);
2. Auswellen des Hefeteigs 1 auf dem Backblech 2, 7;
3. Herstellen einer Krautmischung 4 aus gewürfeltem Bauchspeck, Röstzwiebeln und Sauerkraut;
4. Verteilen von Schupfnudeln 3 aus Kartoffelteig auf dem ausgewellten Hefeteig 1;
5. Verteilen der Krautmischung 4 auf den Schupfnudeln 3 und dem ausgewellten Hefeteig 1;
6. Herstellung des Gusses 5 auf Basis von Molkereierzeugnissen;
7. Aufbringen des Gusses 5 auf den mit den Schupfnudeln 3 und der Krautmischung 4 versehenen Hefeteig 1; und
8. Fertigbacken des Backgerichts 6.

Der Hefeteig 1 wird in vorteilhafter Weise aus Mehl, Milch, Hefe und Salz hergestellt. Bei Verwendung des GN 1/1-Backbleches 7 kann der Hefeteig 1 zusätzlich mit Butter und mit vorzugsweise zwei Eiern hergestellt werden.

Dabei hat sich folgende gewichtsmäßige Zusammensetzung des Hefeteigs 1 als besonders vorteilhaft herausgestellt:
ca. 50 bis 60 Gew.-% Mehl;
ca. 30 bis 35 Gew.-% Milch;
ca. 0,5 bis 3 Gew.-% Salz;
ca. 4,5 bis 7 Gew.-% Hefe;
ca. 0 bis 10 Gew.-% Eier; und
ca. 0 bis 6 Gew.-% Butter.

Der Guss 5 ist aus den Bestandteilen Schmand, Creme fraiche, Sahne, Eier, Gewürze und Gewürzkräuter hergestellt. Als Gewürze werden Salz, Pfeffer und gemahlener Kümmel verwendet. Als Gewürzkräuter werden getrocknete Petersilie und Nelken verwendet. Bei der Zubereitung des Gusses 5 wird die folgende gewichtsmäßige Zusammensetzung verwendet:
ca. 25 bis 32 Gew.-% Schmand;
ca. 20 bis 22 Gew.-%, vorzugsweise 21,3 Gew.-%, Creme fraiche;
ca. 20 bis 22 Gew.-%, vorzugsweise 21,3 Gew.-%, Sahne;
ca. 1,0 bis 1,6 Gew.-% Salz;
ca. 20 bis 27 Gew.-% Eier;
ca. 0,8 bis 1,1 Gew.-% getrocknete Petersilie;
ca. 0,8 bis 1,1 Gew.-% Schnittlauch;
ca. 0,5 bis 1,6 Gew.-% gemahlener Kümmel;
ca. 0,5 bis 1,6 Gew.-% Nelken; und
ca. 0,5 bis 0,6 Gew.-%, vorzugsweise 0,53 Gew.-%, Pfeffer.

Die Krautmischung 4 wird aus der folgenden gewichtsmäßigen Zusammensetzung hergestellt:
ca. 60 bis 65 Gew.-%, vorzugsweise ca. 62,5 Gew.-%, Sauerkraut;
ca. 30 bis 35 Gew.-% gewürfelter Bauchspeck; und
ca. 4,0 bis 6,5 Gew.-% Röstzwiebel.

Insgesamt wird für das Backgericht 6 ca. 14 bis 19 Gew.-% Hefeteig, ca. 30 bis 35 Gew.-% Krautmischung 4, ca. 25 bis 30 Gew.-% Schupfnudeln 3 und ca. 34 bis 40 Gew.-% Guss 5 verwendet. Die Gewichtszusammensetzung der Bestandteile des Backgerichts 6 kann je nach Beschaffenheit der einzelnen Zutaten auch differieren/verändert werden.

Der Hefeteig wird ca. zwei Stunden gehen gelassen. Die erforderliche Backzeit für das Fertigbacken des Gerichts liegt zwischen 25 (28-cm-Backblech 2) und 40 Minuten (GN 1/1-Backblech 7) in einem auf 170°C vorgeheizten Ofen bei Heißluft.

Beispielhaft sei im folgenden noch eine Rezeptur angefügt:
1. 28 cm Backblech 2:
   - Hefeteig:: 80 g Mehl, 50 ml Milch, 10 g Hefe, 1 Prise Salz;
   200 g Schupfnudeln;
   - Krautmischung:: 80 g Bauchspeck, gewürfelt, 10 g Röstzwiebel, 150 g Sauerkraut (gut vermischen); und
   - Guss:: 100 g Schmand, 80 g Creme fraiche, 80 g Sahne, 4 g Salz, 2 g Pfeffer, 1 Prise Nelken, Kümmel, 1 Teelöffel Petersilie, 2 Eier
   (alles gut verrühren)
2. GN 1/1-Backblech 7:
   - Hefeteig:: 500 g Mehl, 60 g Butter, 0,5 Teelöffel Salz, 300 ml Milch, 42 g Hefe, 2 Eier
   (Teig ca. zwei Stunden gehen lassen);
   1000 g Schupfnudeln;
   - Krautmischung:: 500 g Bauchspeck, gewürfelt (roh), 100 g Röstzwiebel, 1000 g Sauerkraut
   (gut miteinander vermischen); und
   - Guss:: 600 g Schmand, 400 g Creme fraiche, 400 g Sahne, 30 g Salz, 10 g Pfeffer, 1 Messerspitze Nelken, 1 Esslöffel Kümmel (gemahlen), 2 Esslöffel Petersilie (getrocknet), 8 Eier
   (alles gut verrühren).

Nach einem Fertigbacken bei 170° C im vorgeheizten Heißluftofen - 25 Minuten (28-cm-Backblech 2) bzw. 40 Minuten (1/1 GN-Backblech 7) - kann das wohlschmeckende und einzigartige Backgericht verzehrt werden. Das Backgericht wird vom Erfinder als Buabaspitzles-Blatz bezeichnet.

## Patentansprüche

1. Backgericht (6) aus Hefe- und Kartoffelteig, wobei auf den Hefeteig (1) Schupfnudeln (3) aus Kartoffelteig und eine Krautmischung (4) aufgebracht sind und wobei als Überzug ein Guss (5) aus Molkereierzeugnissen vorgesehen ist.

2. Backgericht nach Anspruch 1,
**dadurch gekennzeichnet, dass**
die Krautmischung (4) mit Sauerkraut versehen ist.

3. Backgericht nach Anspruch 1 oder 2,
**dadurch gekennzeichnet, dass**
die Krautmischung (4) mit Röstzwiebeln versehen ist.

4. Backgericht nach Anspruch 1, 2 oder 3,
**dadurch gekennzeichnet, dass**
die Krautmischung (4) mit Speck, insbesondere gewürfeltem Bauchspeck versehen ist.

5. Backgericht nach einem der Ansprüche 1 bis 4,
**dadurch gekennzeichnet, dass**
der Hefeteig (1) als Hauptbestandteile Mehl, Milch, Hefe und Salz aufweist.

6. Backgericht nach Anspruch 5,
**dadurch gekennzeichnet, dass**
der Hefeteig (1) des weiteren als Bestandteile Butter und wenigstens ein, vorzugsweise zwei Eier aufweist.

7. Backgericht nach einem der Ansprüche 1 bis 6,
**dadurch gekennzeichnet, dass**
der Hefeteig (1) folgende gewichtsmäßige Zusammensetzung aufweist:
- ca. 50 bis 60 Gew.-% Mehl;
- ca. 30 bis 35 Gew.-% Milch;
- ca. 0,5 bis 3 Gew.-% Salz;
- ca. 4,5 bis 7 Gew.-% Hefe;
- ca. 0 bis 10 Gew.-% Eier; und
- ca. 0 bis 6 Gew.-% Butter.

8. Backgericht nach einem der Ansprüche 1 bis 7,
**dadurch gekennzeichnet, dass**
der Guss (5) die Bestandteile Schmand, Creme fraiche, Sahne, Eier, Gewürze und Gewürzkräuter aufweist.

9. Backgericht nach Anspruch 8,
**dadurch gekennzeichnet, dass**
die Gewürze als Salz, Pfeffer und gemahlener Kümmel ausgebildet ist.

10. Backgericht nach Anspruch 8 oder 9,
**dadurch gekennzeichnet, dass**
die Gewürzkräuter als vorzugsweise getrocknete Petersilie, Nelken oder Schnittlauch ausgebildet sind.

11. Backgericht nach einem der Ansprüche 1 bis 10,
**dadurch gekennzeichnet, dass**
der Guss (5) folgende gewichtsmäßige Zusammensetzung aufweist:
- ca. 25 bis 32 Gew.-% Schmand;
- ca. 20 bis 22 Gew.-%, vorzugsweise 21,3 Gew.-%, Creme fraiche;
- ca. 20 bis 22 Gew.-%, vorzugsweise 21,3 Gew.-%, Sahne;
- ca. 1,0 bis 1,6 Gew.-% Salz;
- ca. 20 bis 27 Gew.-% Eier;
- ca. 0,8 bis 1,1 Gew.-% getrocknete Petersilie;
- ca. 0,8 bis 1,1 Gew.-% Schnittlauch;
- ca. 0,5 bis 1,6 Gew.-% gemahlener Kümmel;
- ca. 0,5 bis 1,6 Gew.-% Nelken; und
- ca. 0,5 bis 0,6 Gew.-%, vorzugsweise 0,53 Gew.-%, Pfeffer.

12. Backgericht nach einem der Ansprüche 1 bis 11,
**dadurch gekennzeichnet, dass**
die Krautmischung (4) folgende gewichtsmäßige Zusammensetzung aufweist:
- ca. 60 bis 65 Gew.-%, vorzugsweise ca. 62,5 Gew.-%, Sauerkraut;
- ca. 30 bis 35 Gew.-% gewürfelter Bauchspeck; und
- ca. 4,0 bis 6,5 Gew.-% Röstzwiebel.

13. Backgericht nach einem der Ansprüche 1 bis 12,
**gekennzeichnet durch**
folgende gewichtsmäßige Zusammensetzung:
- ca. 14 bis 19 Gew.-% Hefeteig (1);
- ca. 30 bis 35 Gew.-% Krautmischung (4);
- ca. 25 bis 30 Gew.-% Schupfnudeln (3); und
- ca. 34 bis 40 Gew.-% Guss (5).

14. Herstellungsverfahren für ein Backgericht (6) aus Hefe- und Kartoffelteig mit den folgenden Verfahrensschritten:
a) Zubereitung des Hefeteigs (1) und gehen lassen;
b) Auswellen des Hefeteigs (1) auf einem Backblech (2,7);
c) Herstellung einer Krautmischung (4);
d) Verteilen von Schupfnudeln (3) aus Kartoffelteig auf dem ausgewellten Hefeteig (1);
e) Verteilen der Krautmischung (4) auf den Schupfnudeln (3) und dem ausgewellten Hefeteig (1);
f) Herstellung eines Gusses (5) auf Basis von Molkereierzeugnissen;
g) Aufbringen des Gusses (5) auf den mit den Schupfnudeln (3) und der Krautmischung (4) versehenen Hefeteig (1); und
h) Fertigbacken des Backgerichts (6).

15. Herstellungsverfahren nach Anspruch 14,
**dadurch gekennzeichnet, dass**
der Krautmischung (4) Sauerkraut und/oder Röstzwiebeln zugegeben wird.

16. Herstellungsverfahren nach Anspruch 14 oder 15,
**dadurch gekennzeichnet, dass**
der Krautmischung (4) Speck, insbesondere gewürfelter Bauchspeck, zugegeben wird.

17. Herstellungsverfahren nach Anspruch 14,
**dadurch gekennzeichnet, dass**
der Hefeteig (1) aus Mehl, Milch, Hefe und Salz hergestellt wird und insbesondere zusätzlich mit Butter und mit wenigstens einem, vorzugsweise mit zwei Eiern hergestellt wird.

18. Herstellungsverfahren nach Anspruch 14 oder 17,
**dadurch gekennzeichnet, dass**
der Hefeteig (1) aus folgender gewichtsmäßiger Zusammensetzung hergestellt wird:
- ca. 50 bis 60 Gew.-% Mehl;
- ca. 30 bis 35 Gew.-% Milch;
- ca. 0,5 bis 3 Gew.-% Salz;
- ca. 4,5 bis 7 Gew.-% Hefe;
- ca. 0 bis 10 Gew.-% Eier; und
- ca. 0 bis 6 Gew.-% Butter.

19. Herstellungsverfahren nach einem der Ansprüche 14 bis 18,
**dadurch gekennzeichnet, dass**
der Guss (5) aus den Bestandteilen Schmand, Creme fraiche, Sahne, Eier, Gewürze und Gewürzkräuter hergestellt wird.

20. Herstellungsverfahren nach Anspruch 19,
**dadurch gekennzeichnet, dass**
als Gewürze Salz, Pfeffer und gemahlener Kümmel und als Gewürzkräuter vorzugsweise getrocknete Petersilie, Nelken oder Schnittlauch verwendet werden.

21. Herstellungsverfahren nach einem der Ansprüche 14 bis 20,
**dadurch gekennzeichnet, dass**
der Guss (5) aus folgender gewichtsmäßiger Zusammensetzung hergestellt wird:
- ca. 25 bis 32 Gew.-% Schmand;
- ca. 20 bis 22 Gew.-%, vorzugsweise 21,3 Gew.-%, Creme fraiche;
- ca. 20 bis 22 Gew.-%, vorzugsweise 21,3 Gew.-%, Sahne;
- ca. 1,0 bis 1,6 Gew.-% Salz;
- ca. 20 bis 27 Gew.-% Eier;
- ca. 0,8 bis 1,1 Gew.-% getrocknete Petersilie;
- ca. 0,8 bis 1,1 Gew.-% Schnittlauch;
- ca. 0,5 bis 1,6 Gew.-% gemahlener Kümmel;
- ca. 0,5 bis 1,6 Gew.-% Nelken; und
- ca. 0,5 bis 0,6 Gew.-%, vorzugsweise 0,53 Gew.-%, Pfeffer.

22. Herstellungsverfahren nach einem der Ansprüche 14 bis 21,
**dadurch gekennzeichnet, dass**
die Krautmischung (4) aus folgender gewichtsmäßiger Zusammensetzung hergestellt wird:
- ca. 60 bis 65 Gew.-%, vorzugsweise ca. 62,5 Gew.-%, Sauerkraut;
- ca. 30 bis 35 Gew.-% gewürfelter Bauchspeck; und
- ca. 4,0 bis 6,5 Gew.-% Röstzwiebel.

23. Herstellungsverfahren nach einem der Ansprüche 14 bis 22,
**dadurch gekennzeichnet, dass**
für das Backgericht (6) folgende gewichtsmäßige Zusammensetzung verwendet wird:
- ca. 14 bis 19 Gew.-% Hefeteig (1);
- ca. 30 bis 35 Gew.-% Krautmischung (4);
- ca. 25 bis 30 Gew.-% Schupfnudeln (3); und
- ca. 34 bis 40 Gew.-% Guss (5).

24. Herstellungsverfahren nach einem der Ansprüche 14 bis 23,
**dadurch gekennzeichnet, dass**
der Hefeteig (1) ca. 2 Stunden gehen gelassen wird und das Fertigbacken des Backgerichts (6) zwischen 25 und 40 Minuten in einem auf 170° C vorgeheiztem Ofen bei Heißluft erfolgt.

## Claims

1. Bakery product (6) made of yeast and potato dough, whereas "Schupfnudeln"(3) (Swabian style potato noodles) made of potato dough and a cabbage mixture are applied on the yeast dough, and whereas a coating (5) made of dairy products is provided as cover.

2. Bakery product according to claim 1, **characterized in that** the cabbage mixture (4) is provided with sauerkraut.

3. Bakery product according to claim 1 or 2, **characterized in that** the cabbage mixture (4) is provided with fried onions.

4. Bakery product according to claim 1, 2 or 3, **characterized in that** the cabbage mixture (4) is provided with bacon, in particular with lard bacon cut into cubes.

5. Bakery product according to one of the claims 1 to 4, **characterized in that** the yeast dough (1) has as major ingredients flour, milk, yeast and salt.

6. Bakery product according to claim 5, **characterized in that** the yeast dough (1) has further as ingredients butter and at least one, preferably two eggs.

7. Bakery product according to one of the claims 1 to 6, **characterized in that** the yeast dough (1) has the following composition in weight:
- approximately 50 to 60 percent by weight of flour;
- approximately 30 to 35 percent by weight of milk;
- approximately 0,5 to 3 percent by weight of salt;
- approximately 4,5 to 7 percent by weight of yeast;
- approximately 0 to 10 percent by weight of egg; and
- approximately 0 to 6 percent by weight of butter.

8. Bakery product according to one of the claims 1 to 7, **characterized in that** the coating (5) has as ingredients sour cream, crème fraîche, cream, eggs, spices and herbs.

9. Bakery product according to claim 8, **characterized in that** the spices are formed of salt, pepper and ground caraway.

10. Bakery product according to claim 8 or 9, **characterized in that** the herbs are preferably formed by dried parsley, cloves or chives.

11. Bakery product according to one of the claims 1 to 10, **characterized in that** the coating (5) has the following composition in weight:
- approximately 25 to 32 percent by weight of sour cream;
- approximately 20 to 22 percent by weight, preferably 21,3 percent by weight of crème fraîche;
- approximately 20 to 22 percent by weight, preferably 21,3 percent by weight of cream;
- approximately 1,0 to 1,6 percent by weight of salt;
- approximately 20 to 27 percent by weight of eggs;
- approximately 0,8 to 1,1 percent by weight of dried parsley;
- approximately 0,8 to 1,1 percent by weight of chives;
- approximately 0,5 to 1,6 percent by weight of ground caraway;
- approximately 0,5 to 1,6 percent by weight of cloves; and
- approximately 0,5 to 0,6 percent by weight, preferably 0,53 percent by weight, of pepper.

12. Bakery product according to one of the claims 1 to 11, **characterized in that** the cabbage mixture (4) has the following composition in weight:
- approximately 60 to 65 percent by weight, preferably approximately 62,5 %, of sauerkraut;
- approximately 30 to 35 percent by weight of lard bacon cut in cubes; and
- approximately 4,0 to 6,5 percent by weight of fried onions.

13. Bakery product according to one of the claims 1 to 12, **characterized by** the following composition in weight:
- approximately 14 to 19 percent by weight of yeast dough (1);
- approximately 30 to 35 percent by weight of cabbage mixture (4);
- approximately 25 to 30 percent by weight of "Schupfnudeln" (3) (Swabian style potato noodles); and
- approximately 34 to 40 percent by weight of coating (5).

14. Manufacturing method for a bakery product (6) of yeast and potato dough with the following procedural steps:
a) Preparation of the yeast dough (1) and allowing to rise;
b) Rolling the yeast dough (1) on a backing tin (2, 7);
c) Preparation of a cabbage mixture (4);
d) Distribution of the "Schupfnudeln" (3) (Swabian style potato noodles) of potato dough on the rolled yeast dough (1);
e) Distribution of the cabbage mixture (4) upon the "Schupfnudeln"(3) (Swabian style potato noodles) and the rolled yeast dough (1);
f) Preparation of a coating (5) on the basis of dairy products;
g) Application of the coating (5) on the yeast dough (1) provided with the "Schupfnudeln"(3) (Swabian style potato noodles) and the cabbage mixture (4); and
h) Completing baking the bakery product (6).

15. Manufacturing method according to claim 14, **characterized in that** sauerkraut and/or fried onions are added to the cabbage mixture (4).

16. Manufacturing method according to claim 14 or 15, **characterized in that** bacon, in particular lard bacon cut in cubes, are added to the cabbage mixture (4).

17. Manufacturing method according to claim 14, **characterized in that** the yeast dough (1) is made of flour, milk, yeast and salt and particularly additionally with butter and with at least one, preferably with two eggs.

18. Manufacturing method according to claim 14 or 17, **characterized in that** the yeast dough (1) is made of the following composition in weight:
- approximately 50 to 60 percent by weight of flour;
- approximately 30 to 35 percent by weight of milk;
- approximately 0,5 to 3 percent by weight of salt;
- approximately 4,5 to 7 percent by weight of yeast;
- approximately 0 to 10 percent by weight of eggs; and
- approximately 0 to 6 percent by weight of butter.

19. Manufacturing method according to one of the claims 14 to 18, **characterized in that** the coating (5) is made of the ingredients sour cream, crème fraîche, cream, eggs, spices and herbs.

20. Manufacturing method according to claim 19, **characterized in that** salt, pepper and ground caraway are used as spices and preferably dried parsley, cloves or chives are used as herbs.

21. Manufacturing method according to one of the claims 14 to 20, **characterized in that** the coating (5) is made of the following composition in weight:
- approximately 25 to 32 percent by weight of sour cream;
- approximately 20 to 22 percent by weight, preferably 21,3 percent by weight of crème fraîche;
- approximately 20 to 22 percent by weight, preferably 21,3 percent by weight of cream;
- approximately 1,0 to 1,6 percent by weight of salt;
- approximately 20 to 27 percent by weight of eggs;
- approximately 0,8 to 1,1 percent by weight of dried parsley;
- approximately 0,8 to 1,1 percent by weight of chives;
- approximately 0,5 to 1,6 percent by weight of ground caraway;
- approximately 0,5 to 1,6 percent by weight of cloves; and
- approximately 0,5 to 0,6 percent by weight, preferably 0,53 percent by weight, of pepper.

22. Manufacturing method according to one of the claims 14 to 21, **characterized in that** the cabbage mixture (4) is made of the following composition in weight:
- approximately 60 to 65 percent by weight, preferably approximately 62,5 percent by weight, of sauerkraut;
- approximately 30 to 35 percent by weight of lard bacon cut in cubes; and
- approximately 4,0 to 6,5 percent by weight of fried onions.

23. Manufacturing method according to one of the claims 14 to 22, **characterized in that** for the bakery product (6) the following composition in weight is used:
- approximately 14 to 19 percent by weight of yeast dough (1);
- approximately 30 to 35 percent by weight of cabbage mixture (4);
- approximately 25 to 30 percent by weight of "Schupfnudeln" (3) (Swabian style potato noodles); and
- approximately 34 to 40 percent by weight of coating (5).

24. Manufacturing method according to one of the claims 14 to 23, **characterized in that** the yeast dough (1) is allowed to rise for approximately 2 hours and the completion of the baking process of the bakery product (6) occurs between 25 and 40 minutes in an oven preheated at 170° by hot-air.

## Revendications

1. Produit de boulangerie (6) en pâte levée et en pâte de pommes de terre, dont sur la pâte levée (1) sont appliqués des "Schupfnudeln" (3) (nouilles en pâte de pommes de terre de style souabe) en pâte de pommes de terre et un mélange de chou (4), et dont en tant que housse est prévue une couche (5) en produits laitiers.

2. Produit de boulangerie selon la revendication 1, **caractérisé en ce que** le mélange de chou (4) est pourvu de choucroute.

3. Produit de boulangerie selon la revendication 1 ou 2, **caractérisé en ce que** le mélange de chou (4) est pourvu d'oignons grillés.

4. Produit de boulangerie selon la revendication 1, 2 ou 3 **caractérisé en ce que** le mélange de chou (4) est pourvu de lard, particulièrement de lard de poitrine coupé en dés.

5. Produit de boulangerie selon une des revendications 1 à 4, **caractérisé en ce que** la pâte levée (1) présente en tant qu'ingrédients principaux de la farine, du lait, de la levure et du sel.

6. Produit de boulangerie selon la revendication 5, **caractérisé en ce que** la pâte levée (1) présente de plus en tant qu'ingrédients du beurre et au moins un, de préférence deux oeufs.

7. Produit de boulangerie selon une des revendications 1 à 6, **caractérisé en ce que** la pâte levée (1) présente une composition en poids suivante :
- environs 50 à 60 % en poids de farine;
- environs 30 à 35 % en poids de lait ;
- environs 0,5 à 3 % en poids de sel ;
- environs 4,5 à 7 % en poids de levure;
- environs 0 à 10 % en poids d'oeufs ; et
- environs 0 à 6 % en poids de beurre.

8. Produit de boulangerie selon une des revendications 1 à 7, **caractérisé en ce que** la couche (5) présente comme ingrédients de la crème acidulée, de la crème fraîche, des oeufs, des épices et des herbes aromatiques.

9. Produit de boulangerie selon la revendication 8, **caractérisé en ce que** les épices sont formées par du sel, du poivre et du cumin moulu.

10. Produit de boulangerie selon la revendication 8 ou 9, **caractérisé en ce que** les herbes aromatiques sont formés de préférence par du persil séché, des clous de girofle ou de la ciboulette.

11. Produit de boulangerie selon une des revendications 1 à 10, **caractérisé en ce que** la couche (5) présente une composition en poids suivante :
- environs 25 à 32 % en poids de crème acidulée;
- environs 20 à 22 % en poids, de préférence 21,3 % en poids de crème fraîche;
- environs 20 à 22 % en poids, de préférence 21,3 % en poids de crème;
- environs 1,0 à 1,6 % en poids de sel;
- environs 20 à 27 % en poids d'oeufs;
- environs 0,8 à 1,1 % en poids de persil séché;
- environs 0,8 à 1,1 % en poids de ciboulette;
- environs 0,5 à 1,6 % en poids de cumin moulu;
- environs 0,5 à 1,6 % en poids de clous de girofle; et
- environs 0,5 à 0,6 % en poids, de préférence 0,53 % en poids, de poivre.

12. Produit de boulangerie selon une des revendications 1 à 11, **caractérisé en ce que** le mélange de chou (4) présente une composition en poids suivante :
- environs 60 à 65 % en poids, de préférence environs 62,5 %, de choucroute;
- environs 30 à 35 % en poids de lard de poitrine coupé en dés; et
- environs 4,0 à 6,5 % en poids d'oignons grillés.

13. Produit de boulangerie selon une des revendications 1 à 12, **caractérisé par** une composition en poids suivante :
- environs 14 à 19 % en poids de pâte levée (1);
- environs 30 à 35 % en poids de mélange de chou (4);
- environs 25 à 30 % en poids de "Schupfnudeln" (3) (nouilles en pâte de pommes de terre de style souabe); et
- environs 34 à 40 % en poids de couche (5).

14. Procédé de préparation d'un produit de boulangerie (6) en pâte levée et en pâte de pommes de terre avec les mesures de procédé suivantes:
a) Préparation de la pâte levée (1) et laisser lever;
b) Rouler la pâte levée (1) sur une plaque de four (2,7);
c) Préparation du mélange de chou (4);
d) Distribution des "Schupfnudeln" (3) (nouilles en pâte de pommes de terre de style souabe) en pâte de pommes de terre sur la pâte levée (1) roulée;
e) Distribution du mélange de chou (4) sur les "Schupfnudeln" (3) (nouilles en pâte de pommes de terre de style souabe) et la pâte levée (1) roulée;
f) Production d'une couche (5) sur la base de produits laitiers;
g) Application de la couche (5) sur la pâte levée (1) pourvue des "Schupfnudeln" (3) (nouilles en pâte de pommes de terre de style souabe) et du mélange de chou (4); et
h) Cuisson à sa finition du produit de boulangerie (6).

15. Procédé de préparation selon la revendication 14, **caractérisé en ce qu'**au mélange de chou (4) sont ajoutés de la choucroute et/ou des oignons grillés.

16. Procédé de préparation selon la revendication 14 ou 15, **caractérisé en ce qu'**au mélange de chou (4) est ajouté du lard, particulièrement du lard de poitrine coupé en dés.

17. Procédé de préparation selon la revendication 14, **caractérisé en ce que** la pâte levée (1) est préparée de la farine, de la levure et du sel et notamment en plus du beurre et d'au moins une, de préférence deux oeufs.

18. Procédé de préparation selon la revendication 14 ou 17, **caractérisé en ce que** la pâte levée (1) est confectionnée d'une composition en poids suivante:
- environs 50 à 60 % en poids de farine;
- environs 30 à 35 % en poids de lait ;
- environs 0,5 à 3 % en poids de sel;
- environs 4,5 à 7 % en poids de levure;
- environs 0 à 10 % en poids d'oeufs; et
- environs 0 à 6 % en poids de beurre.

19. Procédé de préparation selon une des revendications 14 à 18, **caractérisé en ce que** la couche (5) est confectionnée des ingrédients de la crème acidulée, de la crème fraîche, de la crème, des oeufs, des épices et des herbes aromatiques.

20. Procédé de préparation selon la revendication 19, **caractérisé en ce que** comme épices sont utilisées du sel, du poivre et du cumin moulu, et comme herbes aromatiques de préférence du persil séché, des clous de girofle ou de la ciboulette.

21. Procédé de préparation selon une des revendications 14 à 20, **caractérisé en ce que** la couche (5) est confectionnée d'une composition en poids suivante;
- environs 25 à 32 % en poids de crème acidulée;
- environs 20 à 22 % en poids, de préférence 21,3 % en poids de crème fraîche;
- environs 20 à 22 % en poids, préférence 21,3 % en poids de crème;
- environs 1,0 à 1,6 % en poids de sel;
- environs 20 à 27 % en poids d'oeufs;
- environs 0,8 à 1,1 % en poids de persil séché;
- environs 0,8 à 1,1 % en poids de ciboulette;
- environs 0,5 à 1,6 % en poids de cumin moulu;
- environs 0,5 à 1,6 % en poids de clous de girofle; et
- environs 0,5 à 0,6 % en poids, de préférence 0,53 % en poids, de poivre.

22. Procédé de préparation selon une des revendications 14 à 21, **caractérisé en ce que** le mélange de chou (4) est confectionnée d'une composition en poids suivante :
- environs 60 à 65 % en poids, de préférence environs 62,5 %, de choucroute;
- environs 30 à 35 % en poids de lard de poitrine coupé en dés; et
- environs 4,0 à 6,5 % en poids d'oignons grillés.

23. Procédé de préparation selon une des revendications 14 à 22, **caractérisé en ce qu'**une composition en poids suivante est utilisée pour le produit de boulangerie (6):
- environs 14 à 19 % en poids de pâte levée (1);
- environs 30 à 35 % en poids de mélange de chou (4);
- environs 25 à 30 % en poids de "Schupfnudeln" (3) (nouilles en pâte de pommes de terre de style souabe); et
- environs 34 à 40 % en poids de couche (5).

24. Procédé de préparation selon une des revendications 14 à 23, **caractérisé en ce que** la pâte levée (1) est laissée lever pendant environs 2 heures et que la cuisson du produit de boulangerie jusqu'à sa finition a lieu entre 25 et 40 minutes dans un four préchauffé à 170°C par de l'air chaud.
